# EUROPÄISCHE PATENTSCHRIFT

(11) **EP 1 364 502 B1**
(45) Veröffentlichungstag und Bekanntmachung des Hinweises auf die Patenterteilung: **02.12.2009**
(21) Anmeldenummer: 02706634.9
(22) Anmeldetag: 28.01.2002
(51) Int. Cl.: H04L 25/02

(54) **VERFAHREN UND VORRICHTUNG ZUM ABSCHÄTZEN DER ZUGEHÖRIGKEIT VON SIGNALEN AUS EINEM DATENSTROM ZU DEN ENTSPRECHENDEN ÜBERTRAGUNGSKANÄLEN MITTELS CLUSTER-ANALYSE**
METHOD AND DEVICE FOR ASSESSING WHICH SIGNALS FROM A DATA FLOW BELONG TO THE CORRESPONDING TRANSMISSION CHANNELS BY MEANS OF CLUSTER ANALYSIS
PROCEDE ET DISPOSITIF PERMETTANT D'EVALUER L'APPARTENANCE DES SIGNAUX D'UN FLUX DE DONNEES AUX VOIES DE TRANSMISSION CORRESPONDANTES PAR UNE ANALYSE TYPOLOGIQUE

(30) Priorität: 27.02.2001 DE 10109340
(43) Veröffentlichungstag der Anmeldung: 26.11.2003
(73) Patentinhaber: SIEMENS AKTIENGESELLSCHAFT, 80333 München (DE)
(72) Erfinder: BÄR, Siegfried, 85716 Unterschleissheim (DE); SCHWAGMANN, Norbert, 26892 Lehe (DE); SCHMIDT, Holger, 38102 Braunschweig (DE); KOWALEWSKI, Frank, 38228 Salzgitter (DE); GOTTSCHALK, Thomas, 12524 Berlin (DE); CHOI, Hyung-Nam, 22117 Hamburg (DE)
(86) Internationale Anmeldenummer: PCT/DE2002/000291
(87) Internationale Veröffentlichungsnummer: WO 2002/069589

(56) Entgegenhaltungen:
- EP-A- 1 077 551
- WO-A-01/13361
- MICHAUD P: "Clustering techniques" FUTURE GENERATIONS COMPUTER SYSTEMS, ELSEVIER SCIENCE PUBLISHERS. AMSTERDAM, NL, Bd. 13, Nr. 2-3, 1. November 1997 (1997-11-01), Seiten 135-147, XP004099490 ISSN: 0167-739X

## Beschreibung

Die vorliegende Erfindung betrifft ein Verfahren zum Abschätzen der Zugehörigkeit von Signalen aus einem Datenstrom zu den entsprechenden, die jeweiligen Signale übertragenden Kanälen eines Mobilfunksystems, wobei die Signale Nutzdaten und Identifikationsdaten enthalten, und wobei den besagten Identifikationsdaten jeweils eine Kanalschätzung des das jeweilige Signal übertragenden Kanals zugeordnet wird.

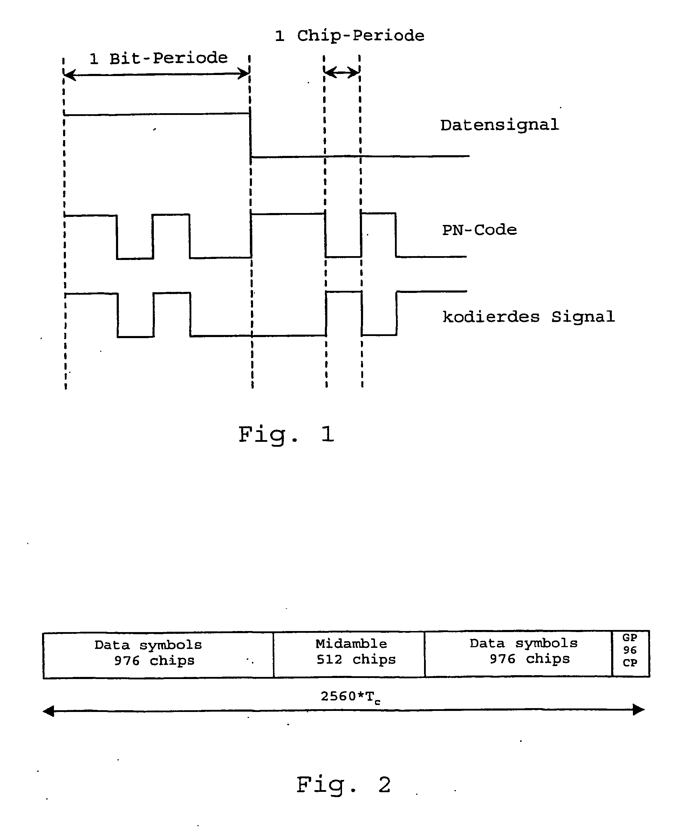

Ein Verfahren der eingangs genannten Art soll beispielsweise bekanntermaßen bei einem Mobilfunksystem der dritten Generation eingesetzt werden, welches nach dem TDD-Mode *(Time Divison Multiplex)* des Mobilfunkstandards UMTS (*Universal Mobile Telecommunications System)* arbeitet, s. hierzu: WCDMA for UMTS - Radio Access For Third Generation Mobile Communications, H. Holma, A. Toskala, John Wiley & Sons, New York, 2000. Durch Code-Vielfachzugriff (CDMA, *Code Divison Multiple Access)* lassen sich mehrere Datenströme für verschiedene Teilnehmer *(User)* gleichzeitig über ein gemeinsames Frequenzband übertragen, s. hierzu: Analyse und Entwurf digitaler Mobilfunksysteme, P. Jung, B.G. Teubner, Stuttgart, 1997). In Fig. 1 ist die Codierung eines Nutzdatensignals dargestellt, wobei auf den Nutzdaten eine Exklusiv-Oder- (XOR-) Verknüpfung mit einer *Pseudo-Noise-*Sequenz (PN-code) bzw. einem sog. Spreizungscode durchgeführt wird.In diesem Beispiel entspricht das Nutzdatensymbol der Periode eines Bits. Die *Pseudo-Noise*-Sequenz bzw. der Spreizungscode besteht aus kleineren Teilen, den sog. *Chips.* Das resultierende kodierte Signal ist in Fig. 1 unter den beiden miteinander zu verknüpfenden Signalen dargestellt.

Beim UMTS TDD-Mode ist ein physikalischer Kanal durch Spreizungscode, Zeitschlitz und Frequenzkanal bestimmt. Jedem Spreizungscode wird hierbei ein Referenzsignal, die sog. Midamble zugeordnet, das mitgesendet wird. In Fig. 2 ist ein Beispiel einer Burststruktur eines dedizierten physikalischen Kanals (DPCH, *Dedicated Physical Channels)* im UMTS TDD-Mode dargestellt, s. hierzu: Mobilfunknetze und ihre Protokolle, Bank 1, S. 415 ff., B. Walke, B.G. Teubner, 2000. Der DPCH existiert auf der Aufwärts- und der Abwärtsstrecke und dient zur Übertragung von Nutz- und Steuerdaten. Jeder Burst besteht aus zwei Nutzdatenfeldern, zwischen denen sich das besagte Steuerdatenfeld bzw. Referenzsignal zur Kanalschätzung, d.h. die Midamble, befindet. Um Laufzeitunterschiede zwischen den verschiedenen Teilnehmersignalen ausgleichen zu können, ist ein Burst 96 *Chips kürzer* als ein Zeitschlitz (GP, *Guard Period*).

Die mit verschiedenen Spreizungscodes gleichzeitig übertragenen Datenströme über das gemeinsame Frequenzband stören sich i.a. gegenseitig. Zum einen führt Mehrwegeausbreitung zur Überlagerung von nacheinander gesendeten Datensymbolen (ISI, *Inter Symbol Interference*)*.* CDMA-Kodierung und Mehrwegeausbreitung sind die Ursache von Mehrfachnutzer-interferenz (MAI, *Multiple Access Interface*)*.* Zur näheren Erläuterung hinsichtlich ISI und MAI s. das obige Buch von P. Jung. ISI und MAI lassen sich im Empfänger durch gemeinsame Detektion (JD, *Joint Detection*) eliminieren. Dabei werden aus dem Empfangssignal die Daten aller Teilnehmer zugleich geschätzt, auch wenn nur die Daten eines Teilnehmers von Interesse sind.

Im Empfänger hat also der Joint-Detection-Algorithmus (JD-Algorithmus) zum Ziel, zu jedem Spreizungscode das dazugehörige Nutzsignal aus dem gesamten Datenstrom herauszurechnen. Dazu benötigt der JD-Algorithmus sogenannte Kanalschätzungen, die ihm ein vorgeschalteter Kanalschätzer liefert. Der Kanalschätzer ermittelt zu jedem Spreizungscode mit Hilfe der dazu gehörenden Midamble die Kanalschätzung. Die dabei ermittelte Kanalschätzung ist - da eine Schätzung - fehlerbehaftet.

Aus der EP 1 077 551 A1 ist ein empfangsseitiges Verfahren zur Elimination von Signalinterferenzen in einem CDMA-Kommunikationssystem bekannt, bei dem vor dem gemeinsamen JD-Detektionsverfahren mit Hilfe von Matched-Filtern für jeden Funkkanal-Benutzer eine Kanalschätzung durch jeweilige Korrelation einer Midamble-Sektion des Empfangssignals mit bekannten Midamblen durchgeführt wird, die den Benutzern vorab zugeordnet sind. Dem Ausgang jedes Matched-Filters ist ein Schwellwertentscheider nachgeordnet, durch den nur bei Überschreiten eines vorgegebenen Signalpegels das Signal auf seinem Signalpfad zur JD-Einheit weitergeleitet wird und ansonsten nicht zur JD-Einheit übermittelt wird.

Im Artikel "Clustering techniques", Future Generations Systems, Elsevier Science Publishers, Amsterdam, NI (01-11-1997), 13 (2 - 3), 135 - 147 ist unter 3.1 ein hierarchisches Clusterverfahren zur Gruppenbildung lediglich allgemein angegeben.

Es ist des weiteren bekannt, dass zu einem Teilnehmer mehrere Spreizungscodes gehören können, wobei sich die Anzahl für jeden Teilnehmer nach dem Bedarf für die momentante Übertragung richtet. Für diesen Teilnehmer werden demnach mehrere, i.a. nicht exakt gleiche, sondern vielmehr ähnliche und somit fehlerbehaftete Kanalschätzungen berechnet. Die Information, dass einem Teilnehmer mehrere Spreizungscodes zugeordnet sind bzw. von diesem verwendet werden, steht dem JD-Algorithmus im mobilen Empfänger jedoch nicht zur Verfügung.

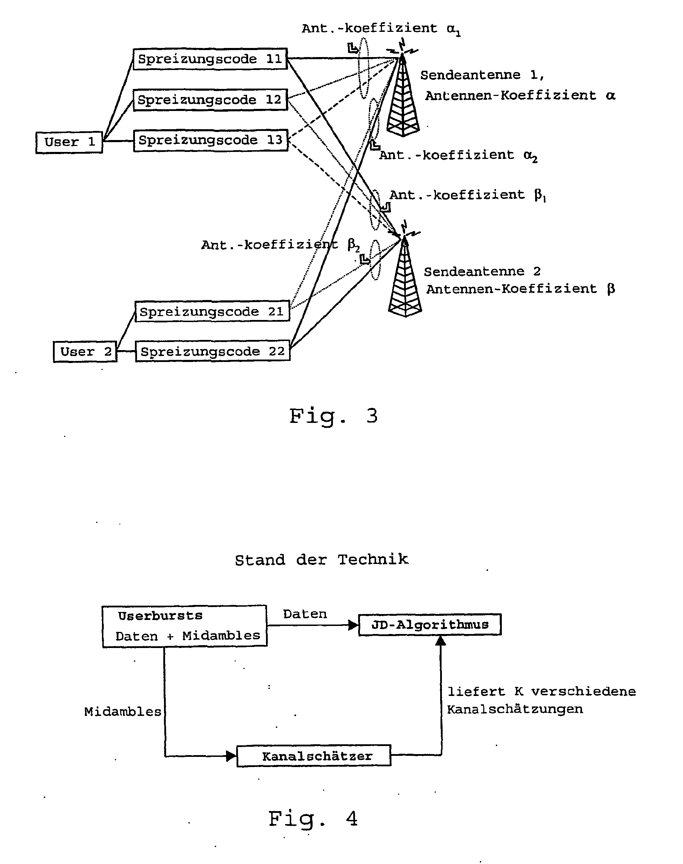

Die Sachlage, dass ein Teilnehmer mehrere Spreizungscodes nutzen kann, wird umso komplizierter, wenn die Teilnehmerinformationen im Festsender so aufbereitet werden, dass diese Informationen über mehrere Sendeantennen übertragen werden. Dieser Vorgang wird Beamforming genannt. Beim Beamforming werden N Antennen so angesteuert, dass eine räumlich gerichtete Übertragung zu einem Empfänger möglich ist. Jeder Antenne ist hierbei ein bestimmter Antennenkoeffizient zugeordnet, der für verschiedene Teilnehmer unterschiedlich ist, aber für alle von einem Teilnehmer genutzten/verwendeten Spreizungscodes gleich ist. Für alle Spreizungscodes eines Teilnehmers gelten die gleichen Antennenkoeffizienten. In Fig. 3 ist eine solche Zuordnung von zwei Teilnehmern 1 und 2 zu jeweils zwei bzw. drei verschiedenen Spreizungscodes mit den Bezeichnungn 11, 12, 13 bzw. 21, 22 und zwei Sendeantennen mit den Antennenkoeffizienten α und β dargestellt. Den drei Spreizungscodes 11, 12 und 13 des Teilnehmers 1 ist für die Antenne 1 der Antennenkoeffizient α₁ und für die Antenne 2 der Antennenkoeffizient β₁ zugeordnet, den zwei Spreizungscodes 21, 22 des Teilnehmers 2 für die Antenne 1 der Antennenkoeffizient α₂ und für die Antenne 2 der Antennenkoeffizient β₂.

Die Teilnehmerinformationen/Teilnehmersignale können für jede Antenne die gleichen, also "Kopien" sein oder eine "große" Information in mehreren Teilen enthalten.

Durch den beim Beamforming sehr geringen Abstand der Antennen (in der Größenordnung der halben Wellenlänge) sind die Eigenschaften für die Ausbreitung der elektromagnetischen Wellen von jeder Sendeantenne zur Empfangsantenne so ähnlich, dass man von deren Identität ausgeht. Der Mobilfunkkanal, der durch die Kanalschätzung geschätzt wird, umfaßt zusätzlich noch die der Hochfrequenztechnik (HF) spezifischen Eigenschaften und den genannten Einfluß der Antennenkoeffizienten. Dies bedeutet, dass die Signale von jeder Antenne zwar den gleichen Ausbreitungseigenschaften unterliegen, durch die Gewichtung mit den Koeffizienten erscheint nach der Kanalschätzung aber der Ausbreitungsweg von jeder Sendeantenne zur Empfangsantenne etwas unterschiedlich zu sein.

Der Grund hierfür liegt darin, dass die Kanalschätzung z.B. durch Korrelation des empfangenen Signals (bzw. dem Teil des Signals, das die Midamble enthält) mit der dem Spreizungscode zugeordneten Midamble erfolgt. Da bei den Sendeantennen die Midamble als Teil des kompletten Bursts aber noch mit den antennenspezifischen Koeffizienten gewichtet wird, werden über den eigentlich identischen Kanal unterschiedliche Midambles übertragen. Durch die Korrelation mit der ursprünglichen Midamble ergeben sich demzufolge auch unterschiedliche Kanalschätzungen.

Fig. 4 faßt das bekannte Verfahren noch einmal anschaulich zusammen. Mehrere Datenbursts bestehend aus Nutzdaten und Midambles (der Anzahl K) werden in einem Empfänger empfangen. Jede Midamble wird in einem Kanalschätzer einem Ubertragungskanal zugeordnet und dem JD-Algorithmus zugeführt, dem auf einem anderen Weg ebenfalls die Nutzdaten bereitgestellt werden. Der JD-Algorithmus berechnet aus dem gesamten Datenstrom zu jeder Midamble K (also zu jedem Spreizungscode) bzw. zu dem entsprechend geschätzten Kanal das dazugehörige Nutzsignal.

Nachteilig bei dem bekannten Verfahren ist, dass die vom Kanalschätzer gelieferten Kanalschätzungen vom JD-Algorithmus benutzt werden, ohne dass dieser eine Information dahingehend erhielte, dass mehrere Kanalschätzungen zu einem einzigenTeilnehmer gehören. Der JD-Algorithmus geht vielmehr von unterschiedlichen Teilnehmern aus und ermittelt pro Spreizungscode und damit pro Signal eine Kanalschätzung.

Es ist Aufgabe der vorliegenden Erfindung, ein Verfahren und eine entsprechende Vorrichtung der eingangs genannten Art für ein Mobilfunksystem zur Verfügung zu stellen, so dass z.B. dem JD-Algorithmus im Empfänger eines Mobilfunkgerätes eine zuverlässigere Kanalzuordnung bereitgestellt wird, damit der JD-Algorithmus eine verbesserte Signaldetektion gewährleisten kann. Allgemeiner stellt sich die Aufgabe einer verbesserten Kanalzuordnung auch in anderen Gebieten, z.B. der Sprachsignalverarbeitung.

Diese Aufgabe wird bei einem der Verfahren der eingangs genannten Art dadurch gelöst, dass die besagten Kanalschätzungen anhand mindestens eines Ähnlichkeitsmaßes in Gruppen zu einem oder mehreren, als ähnlich eingestuften Kanalschätzungen geordnet werden, wobei zumindest einige dieser Kanalschätzungen in je einer Gruppe zur Ermittlung einer die jeweilige Gruppe repräsentierende Kanalschätzung heranziehbar sind.

Des weiteren wird diese Aufgabe bei einer Vorrichtung dadurch gelöst, dass die Vorrichtung einen Prozessor aufweist, der derart eingerichtet ist, dass von ihm die erfindungsgemäßen Verfahrens schritte durchführbar sind.

Die Vorteile der Erfindung sind insbesondere darin zu sehen, dass - insbesondere im Falle des Empfangs von mittels des UMTS TTD-Mode gesendeten und empfangenen Daten - die zu den Spreizungscodes gehörenden Kanalschätzungen, die der Kanalschätzer liefert, auf Ähnlichkeit untersucht und so vor Bereitstellung z.B. für den JD-Algorithmus aufbereitet werden. Auf diese Weise können die Informationen, dass mehrere Kanalschätzungen zu einem Teilnehmer gehören, trotz unterschiedlicher Spreizungscodes und ggf. Antennen-Beamforming auch im Empfänger zur Verfügung stehen, ohne dass diese Information explizit übertragen wird. Eine adäquate Weiterverarbeitung der zueinander gehörenden Kanalschätzungen liefert dann einen genaueren Eingangswert insbesondere für den JD-Algorithmus, da die Kanalschätzungen weniger fehlerbehaftet sind und somit bessere Detektionsresultate für jeden Teilnehmer als Ergebnis des JD-Algorithmus erhalten werden können.

Bei derart durchgeführten Ahnlichkeitsuntersuchungen zwischen den Kanalschätzungen ist es möglich und/oder wahrscheinlich, dass Gemeinsamkeiten zwischen einer Anzahl Kanalschätzungen detektiert werden, die auf die Herkunft der Signale von einem Teilnehmer schließen lassen. Die weitere Verarbeitung mit dem JD-Algorithmus wird - wie oben erwähnt - dadurch vereinfacht.

Insgesamt können somit insbesondere dem JD-Algorithmus verbesserte Kanalschätzungen für den einen Teilnehmer bereitgestellt und damit die anschließende Detektionsresultate verbessert werden. Es werden dabei sowohl Intersymbolals auch Mehrfachnutzer-Interferenz (ISI, MAI) eliminiert.

Die Bestimmung der Ähnlichkeit von Kanalschätzungen kann vorzugsweise durch Vergleich von Kanalschätzungen untereinander, also relativ, oder durch Vergleich der Kanalschätzungen mit einem absoluten Wert erfolgen.

Bei der relativen Ähnlichkeitsbestimmung werden vorzugsweise mehrere und besonders bevorzugt jeweils zwei Kanalschätzungen hinsichtlich des Ähnlichkeitsmaßes miteinander verglichen, wobei hierzu zweckmäßigerweise ein Ahnlichkeitswert als Grundlage für die besagte Gruppierung ermittelt wird. Es bietet sich hierbei an, als Ähnlichkeitsmaß insbesondere den euklidischen Abstand - im folgenden kurz Abstand genannt - zwischen je zwei Kanalschätzungen heranzuziehen. Der Ähnlichkeitswert würde dann zweckmäßigerweise als Zahl ausgedrückt werden. Werden mehr als zwei Kanalschätzungen zugleich miteinander verglichen, können entsprechend dimensionale Matritzen mit einzelnen Ähnlichkeitswerten als den Matrixelementen konstruiert werden.

Prinzipiell lassen sich verschiedenste Ähnlichkeitsmaße - ausgedrückt in Ähnlichkeitswerten - definieren. Im folgenden wird speziell auf den Beispielfall der Verwendung des euklidischen Abstandes von Kanalschätzungen als Ähnlichkeitsmaß eingegangen, ohne dass hierdurch eine entsprechende Einschränkung erfolgen würde.

Wird also der Abstand zweier Kanalschätzungen als Ähnlichkeitsmaß verwendet, wird bei einer bevorzugten Variante ein Abstands-Schwellenwert definiert, über- bzw. unterhalb welchem die beiden Kanalschätzungen als ähnlich oder unähnlich eingestuft werden. Der Schwellenwert wird entweder zu Beginn des Vergleichs der Kanalschätzungen definiert oder aber nach einem ersten (vollständigen oder teilweisen) oder mehreren Vergleichsdurchläufen der Kanalschätzungen auf Grundlage der in diesen Vergleichen ermittelten Abstände festgelegt, z.B. als Bruchteil oder Vielfaches des mittleren Abstandes der Kanalschätzungen.

Die letztgenannte Variante ist ein Beispiel für eine statistische Auswertung der Abstände der Kanalschätzungen (allgemein der Ähnlichkeitswerte bzgl. eines Ähnlichkeitsmaßes). Es bietet sich bei statistischen Auswertungen an, den Schwellenwert in Abhängigkeit von der jeweiligen Auswertungsmethode hinsichtlich der Einstufung der Kanalschätzungen als ähnlich oder unähnlich zu bestimmen.

Vorzugsweise wird als Schwellenwert ein Extremwert bei einer statistischen Aufstellung der ermittelten Abstände herangezogen, vorzugsweise bei der Gegenüberstellung der Häufigkeit des Auftretens der einzelnen Abstände als Funktion dieser Abstände. Vorteilhafterweise wird hierbei das erste Minimum in dieser Funktion als Schwellenwert verwendet.

Besonders bevorzugt wird aus mindestens einer, vorzugsweise allen aufgestellten Gruppen von Kanalschätzungen eine die Gruppe repräsentierende Kanalschätzung ausgewählt, um diese dann dem besagten JD-Algorithmus zuzuführen. Es bietet sich hierbei an, als Auswahlkriterium für diese, jeweils eine Gruppe repräsentierende Kanalschätzung den arithmetischen Durchschnitt aller Kanalschätzungen in dieser Gruppe zu wählen. Durch die Mittelung kann somit eine Verkleinerung der Fehler in der Kanalschätzung realisiert werden.

Vorteilhafte Weiterbildungen sich durch die Merkmale der Unteransprüche gekennzeichnet.

Im Folgenden wird die Erfindung anhand der Zeichnung näher erläutert. Es zeigen:
- Fig. 1: eine Darstellung der bekannten Generierung eines CDMA-Signals durch Multiplikation eines Nutzerdaten-Signals mit einer PN-Sequenz;
- Fig. 2: ein bekanntes Beispiel einer Burststruktur im UMTS TDD-Mode;
- Fig. 3: eine bekannte prinzipielle Darstellung einer Zuordnung von Teilnehmern zu Spreizungscodes und Antennen;
- Fig. 4: eine Ermittlung der Kanalzuordnung entsprechend dem Stand der Technik;
- Fig. 5: eine erfindungsgemäße Ermittlung der Kanalzuordnung, und
- Fig. 6: ein Histogramm mit einer Auftragung der Anzahl der ermittelten jeweiligen Kanalschätzungen als Funktion der verschiedenen Abstandswerte.

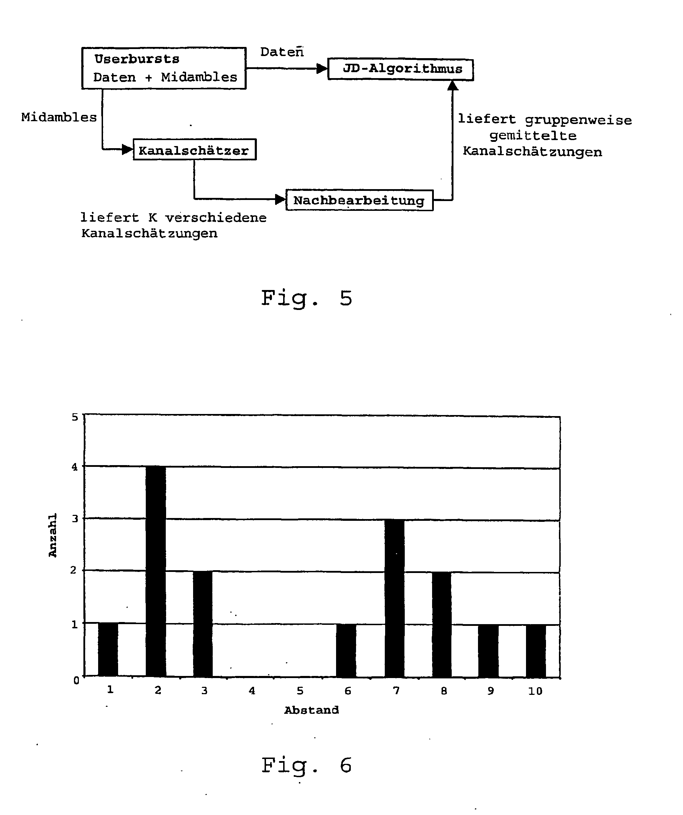

In Fig. 5 ist das erfindungsgemäße Verfahren für den Fall einer Datendetektion im UMTS TDD-Modus schematisch dargestellt. Gegenüber dem bekannten, in Fig. 4 dargestellten Verfahren ist dem Kanalschätzer, der K verschiedene Kanalschätzungen liefert, eine Nachbearbeitung nachgeschaltet. In dieser werden die K Kanalschätzungen einer Ähnlichkeitsuntersuchung unterworfen und - je nachdem, ob das Ähnlichkeitsmaß bzw. Ähnlichkeitskriterium - erfüllt wird, einer Gruppe von untereinander ähnlichen Kanalschätzungen zugeordnet oder nicht. Das Ergebnis dieser Ähnlichkeitsuntersuchung wird dann nachfolgend einem JD-Algorithmus zugeführt bzw. bereitgestellt.

Nachfolgend wird ein Beispiel der erfindungsgemäßen Ähnlichkeitsuntersuchung der Kanalschätzungen einschießlich einer entsprechenden Gruppierung, die beide vorzugsweise mittels eines Computerprogramms im Empfänger eines Mobilkommunikationsgerätes realisiert werden, Schritt für Schritt vorgestellt:

Schritt 1: Es wird ein Ähnlichkeitsmaß, wie z.B. der euklidische Abstand, zwischen zwei beliebigen Kanalschätzungen definiert.

Schritt 2: Es wird zwischen allen möglichen Paaren von Kanalschätzungen das Ähnlichkeitsmaß ermittelt. Im folgenden wird als Ähnlichkeitsmaß der euklidische Abstand - kurz: Abstand - gewählt. Wird ein bestimmter Schwellenwert unterschritten oder, je nach Definition des Abstandes, überschritten, so werden die zwei Kanalschätzungen als "ähnlich" oder als "unähnlich" bewertet.

Schritt 3: Mit einem bestimmten Verfahren werden dann die als ähnlich angesehenen Kanalschätzungen gruppiert. Eine Kanalschätzung kann maximal zu einer einzigen Gruppe gehören, und eine Gruppe repräsentiert einen Kanal bzw. einen Teilnehmer.

Beispielhaft wird im folgenden ein Verfahren für Schritt 3 erläutert, in dem Gruppen mit ähnlichen Kanalschätzungen ermittelt werden:

Schritt 3a: Es wird aus allen Kanalschätzungen, die noch nicht zu einer Gruppe gehören, ein Paar herausgesucht, das nach dem gewählten Ähnlichkeitsmaß am ähnlichsten ist, d.h. den kleinsten (bzw. größten, s.o.) Abstand hat. Diese zwei Kanalschätzungen bilden eine neue Gruppe. Existiert ein solches Paar nicht, so können keine weiteren Gruppen gebildet werden.

Schritt 3b: Es werden alle Kanalschätzungen, die ähnlich zu den bisher in der Gruppe befindlichen Kanalschätzungen sind, gesucht. Trifft dies für genau eine Kanalschätzung zu, so wird diese in die Gruppe aufgenommen. Trifft dies für mehr als eine Kanalschätzung zu, so wird die Kanalschätzung mit der kleinsten (bzw. größten, s.o.) Summe der Abstände zu den bisher in der Gruppe befindlichen Kanalschätzungen in die Gruppe aufgenommen. Trifft dies für keine Kanalschätzung zu, so kann die Gruppe nicht vergrößert werden. Die Gruppe ist damit festgelegt, es kann mit der Suche nach einer weiteren Gruppe bei Schritt 3a fortgesetzt werden.

Schritt 3c: Es wird sukzessive mit der Vergrößerung der Gruppe bei Schritt 3b fortgesetzt.

Das Resultat des Verfahrens ist, daß alle Kanalschätzungen, die zueinander ähnlich sind, eine Gruppe bilden. Dabei muß in dem gewählten Ausführungsbeispiel jede Kanalschätzung in einer Gruppe zu allen anderen Kanalschätzungen in der gleichen Gruppe ähnlich sein. Falls K₁, K₂, K₃ Kanalschätzungen sind, und K₁ ist ähnlich zu K₂, K₂ ist ähnlich zu K₃, aber K₁ ist nicht ähnlich zu K₃, so werden diese drei Kanalschätzungen nicht als eine Gruppe festgelegt.

Nachdem nun die Gruppen mit ähnlichen Kanalschätzungen ermittelt wurden, wird zu jeder Gruppe die durchschnittliche Kanalschätzung berechnet, um diese dem JD-Algorithmus zur Verfügung zu stellen. Es werden dann pro Gruppe alle Kanalschätzungen vorzugsweise durch die dazugehörige durchschnittliche Kanalschätzung ersetzt.

Im folgenden werden anhand zweier konkreter Ausführungsbeispiele mit beispielhaften Zahlenwerten die obigen Schritte 1, 2, 3a, 3b und 3c näher erläutert:

Seien H1,...,H6 sechs Kanalschätzungen, die der Kanalschätzer zu sechs genutzten Spreizungscodes liefert. Das Ähnlichkeitsmaß, das in Schritt1 definiert wird, liefert folgende Werte für die Abstände (Schritt2):

| | H1 | H2 | H3 | H4 | H5 | H6 |
|---|---|---|---|---|---|---|
| H1 | 0 | 2 | 7 | 1 | 2 | 3 |
| H2 | 2 | 0 | 8 | 2 | 7 | 9 |
| H3 | 7 | 8 | 0 | 7 | 3 | 10 |
| H4 | 1 | 2 | 7 | 0 | 6 | 2 |
| H5 | 2 | 7 | 3 | 6 | 0 | 8 |
| H6 | 3 | 9 | 10 | 2 | 8 | 0 |

Die Schwelle, an der zwischen "ähnlich" und "unähnlich" getrennt wird (s. Schritt 2), soll in dem ersten Ausführungsbeispiel mit 3 festgelegt werden.

In dem zweiten Ausführungsbeispiel wird der Abstandswert, ab dem zwei Kanalschätzungen als ähnlich eingestuft werden, an Hand der Statistik der Abstände der Kanalschätzungen gewählt. Die Statistik der Abstände wird durch das in Fig. 6 dargestellte Histogramm beschrieben. Die Schwelle, an der zwischen "ähnlich" und "unähnlich" getrennt wird (siehe Schritt2), wird in diesem Ausführungsbeispiel festgelegt als der Abstand eines ausgeprägten Minimums im Histogramm. Das Histogramm hat beim Abstand 4 bzw. 5 ein solches ausgeprägtes Mininmum. Daher werden alle Kanalschätzungen mit einem Abstand kleiner als 4 bzw. 5 als ähnlich angesehen.

Im dritten Ausführungsbeispiel wird die Ähnlichkeitsschwelle festgelegt, indem ein Bruchteil oder ein Vielfaches des mittleren Abstandes der Kanalschätzungen als Schwelle definiert wird. Für das obige Zahlenbeispiel beträgt der mittlere Abstand 5,13.

In allen drei Ausführungsbeispielen folgt nun das Bilden von Gruppen mit ähnlichen Kanalschätzungen (Schritt3) nach dem oben erläuterten Vefahren:

Das Paar, das "ähnlich" ist und den kleinsten Abstand hat, ist (H1,H4) mit dem Wert 1 (s. Schritt 3a). Zu H1 **und H4** sind die Kanalschätzungen H2 und H6 sowohl gemäß dem ersten Ausführungsbeispiel "ähnlich" (Abstand kleiner oder gleich 3) als auch gemäß dem zweiten Ausführungsbeispiel (Abstand kleiner oder gleich 4 bzw. 5). Dies gilt auch für das dritte Ausführungsbeispiel (Abstand kleiner oder gleich 5,13). Die Summe der Abstände zu H1 und H4 ergeben für H2 den Wert 4, für H6 den Wert 5. Damit wird H2 zur Gruppe hinzugefügt (s. Schritt 3b). Die Ähnlichkeitsuntersuchung wird nun mit allen noch nicht eingruppierten Kanalschätzungen im Hinblick auf die Gruppe mit den Elementen H1, H4 und H2 fortgesetzt (s. Schritt 3b). Die Suche nach Kanalschätzungen, die ähnlich zu H1, H4 und H2 sind, ist allerdings erfolglos. Die Gruppe kann deshalb nicht weiter vergrößert werden und ist damit sowohl gemäß dem ersten, zweiten als auch dritten Ausführungsbeispiel festgelegt.

Im weiteren Verlauf werden die Kanalschätzungen aus der ersten Gruppe (H1, H4, H2) nicht mehr berücksichtigt. Daher kann obige Tabelle übersichtlicher dargestellt werden:

| | H3 | H5 | H6 |
|---|---|---|---|
| H3 | 0 | 3 | 10 |
| H5 | 3 | 0 | 8 |
| H6 | 10 | 8 | 0 |

Auf diese restlichen Kanalschätzungen wird das Verfahren erneut angewendet:

Das Paar, das ähnlich ist und den kleinsten Abstand hat, ist (H3,H5) mit dem Wert 3. Da es keine Kanalschätzung gibt, die ähnlich zu H3 und H5 ist, kann die Gruppe gemäß aller drei Ausführungsbeispiele nicht vergrößert werden und ist somit festgelgt.

Streicht man nun auch noch die Kanalschätzungen H3 und H5, so bleibt lediglich die Kanalschätzung H6 übrig. Somit kann keine weitere Gruppe gebildet werden, das Verfahren ist abgeschlossen. Das Ergebnis lautet: Es wurden drei Gruppen gefunden. Die erste Gruppe besteht aus den Kanalschätzungen H1, H2 und H4. Die zweite Gruppe besteht aus den Kanalschätzungen H3 und H5, und die dritte Gruppe enthält lediglich die Kanalschätzung H6.

Da gemäß der Ähnlichkeitsuntersuchung angenommen wird, daß die Kanalschätzungen aus einer Gruppe alle zum gleichen Teilnehmer und damit zum gleichen Kanal gehören, können die Kanalschätzungen in den Gruppen entsprechend nachbereitet werden, bevor sie in den JD-Algorithmus einfließen:

Für die erste Gruppe seien die Kanalschätzungen reel und 4-dimensionale Vektoren mit z.B. H1 = (1, 10, 2, 0); H2 = (1, 11, 1, 1); H4 = (0, 10, 1, 2). Deren Durchschnitt ergibt die Kanalschätzung (0.66, 10.33, 1.33, 1). Die Kanalschätzungen H1, H2 und H4 werden durch diese durchschnittliche Kanalschätzung ersetzt, bevor sie in den JD-Algorithmus einfließen.

Für die zweite Gruppe seien die Kanalschätzungen ebenfalls reel und 4-dimensionale Vektoren mit z.B. H3 = (8, 6, 1, 0); H5 = (9, 6, 1, 1). Deren Durchschnitt liefert die Kanalschätzung (8.5, 6, 1, 0.5). Die Kanalschätzungen H3 und H5 werden durch diese durchschnittliche Kanalschätzung ersetzt, bevor sie in den JD-Algorithmus einfließen.

Die Kanalschätzung H6 als dritte Gruppe fließt unverändert in den JD-Algorithmus ein.

Gemäß der vorliegenden Erfindung kann demnach durch mindestens eine Ähnlichkeitsuntersuchung bestimmt werden, welche Kanalschätzungen zum gleichen Teilnehmer gehören. Anhand der Ähnlichkeitsuntersuchung können somit zusätzliche Informationen aus den Kanalschätzungen extrahiert werden. Die dementsprechende Informationslücke beim Empfänger kann geschlossen werden, wodurch bessere Detektionsresultate realisiert werden können. Zusätzliche Übertragungsressourcen für diese Informationen werden nicht benötigt.

Die Erfindung ist gleichfalls auf eine Vorrichtung mit einem Prozessor gerichtet, mittels dem die erfindungsgemäßen Verfahrensschritte realisierbar sind. Ist die Vorrichtung als mobiles Telekommunikationsendgerät ausgebildet, umfaßt sie neben einem Empfangsmodul bevorzugt auch ein Sendemodul. Das Empfangsmodul ist ausgelegt zum Empfang der Signale, welche erfindungsgemäß aufbereitet werden.

Das erfindungsgemäße Verfahren wird bevorzugt mittels entsprechender Computerprogramme sowie einem Computerprogramm-Erzeugnis realisiert.

Die vorliegende Erfindung ist nicht nur auf das näher beschriebene Verfahren in der Mobilkommunikation und insbesondere beim Senden, Übertragen und Empfangen im UMTS TDD-Modus anwendbar, sondern auch auf andere Ähnlichkeitsuntersuchungsmethoden, die auf einer Schwellenwertentscheidung für Kanalschätzungsähnlichkeiten beruhen, wie z.B. andere Klusteranalyse-Verfahren.

## Patentansprüche

1. Verfahren zum Abschätzen der Zugehörigkeit von Signalen aus einem Datenstrom zu den entsprechenden, die jeweiligen Signale übertragenden Kanälen eines Mobilfunksystems, wobei die Signale Nutzdaten und Identifikationsdaten enthalten, und wobei den besagten Identifikationsdaten jeweils eine Kanalschätzung des das jeweilige Signal übertragenden Kanals zugeordnet wird,
**dadurch gekennzeichnet,**
**dass** die besagten Kanalschätzungen anhand mindestens eines Ähnlichkeitsmaßes in Gruppen zu einer oder mehreren, als ähnlich eingestuften Kanalschätzungen geordnet werden, wobei zumindest einige dieser Kanalschätzungen in je einer Gruppe zur Ermittlung einer die jeweilige Gruppe repräsentierende Kanalschätzung heranziehbar sind.

2. Verfahren nach Anspruch 1,
**dadurch gekennzeichnet,**
**dass** die Signale Mobilfunksignale sind.

3. Verfahren nach Anspruch 2,
**dadurch gekennzeichnet,**
**dass** die Mobilfunksignale nach dem UMTS-TDD-Modus übertragene und empfangene Mobilfunksignale sind.

4. Verfahren nach einem der vorhergehenden Ansprüche,
**dadurch gekennzeichnet,**
**dass** die Identifikationsdaten Spreizungscodes umfassen, welchen jeweils mindestens eine Datensequenz zugeordnet ist.

5. Verfahren nach Anspruch 4,
**dadurch gekennzeichnet,**
**dass** die Identifikationsdaten Spreizungscodes umfassen, welchen jeweils eine Midamble entsprechend den im UMTS-TDD-Modus übertragenen Signalen zugeordnet ist.

6. Verfahren nach einem der vorhergehenden Ansprüche,
**dadurch gekennzeichnet,**
**dass** zumindest einige Signale mit Antennenkoeffizienten gewichtet sind, die zu Sendeantennen gehören, über welche diese Signale übertragen werden.

7. Verfahren nach einem der vorhergehenden Ansprüche,
**dadurch gekennzeichnet,**
**dass** mit Hilfe des mindestens einen, in Ähnlickeitswerten ausgedrückten Ähnlichkeitsmaßes die Ähnlichkeit von Kanalschätzungen relativ zueinander oder absolut bestimmt wird.

8. Verfahren nach Anspruch 7,
**dadurch gekennzeichnet,**
**dass** mit Hilfe des mindestens einen, in Ähnlichkeitswerten ausgedrückten Ähnlichkeitsmaßes die Ähnlichkeit von Kanalschätzungen absolut im Verhältnis zu einem oder mehreren, von den jeweiligen Kanalschätzungen unabhängigen Werten, bestimmt wird.

9. Verfahren nach einem der Ansprüche 7 oder 8,
**dadurch gekennzeichnet,**
**dass** zwischen jeweils zwei Kanalschätzungen anhand des mindestens einen Ähnlichkeitsmaßes ein Ähnlichkeitswert ermittelt wird, um diesen Ähnlichkeitswert als Grundlage für die besagte Gruppierung zu verwenden.

10. Verfahren nach Anspruch 9,
**dadurch gekennzeichnet,**
**dass** als Ähnlichkeitsmaß der euklidische Abstand zwischen je zwei Kanalschätzungen herangezogen wird.

11. Verfahren nach Anspruch 10,
**dadurch gekennzeichnet,**
**dass** als Schwellenwert zur Einstufung hinsichtlch Ähnlichkeit bzw. Unähnlichkeit ein definierter Abstandswert zwischen je zwei Kanalschätzungen verwendet wird.

12. Verfahren nach einem der vorhergehenden Ansprüche,
**dadurch gekennzeichnet,**
**dass** eine statistische Auswertung der Ähnlichkeitswerte von jeweils zwei Kanalschätzungen vorgenommen wird.

13. Verfahren nach Anspruch 12,
**dadurch gekennzeichnet,**
**dass** ein von der statistischen Auswertung abhängiger Schwellenwert zur Einstufung hinsichtlich Ähnlichkeit bzw. Unähnlichkeit verwendet wird.

14. Verfahren nach einem der Ansprüche 12 oder 13,
**dadurch gekennzeichnet,**
**dass** als Schwellenwert zur Einstufung hinsichtlich Ähnlichkeit bzw. Unähnlichkeit ein Extremum in der Darstellung der Häufigkeit des Auftretens der einzelnen Ähnlichkeitswerte als Funktion der Ähnlichkeitswerte ermittelt wird.

15. Verfahren nach Anspruch 14,
**dadurch gekennzeichnet,**
**dass** als Schwellenwert ein Minimum in der Darstellung der Häufigkeit des Auftretens der einzelnen Ähnlichkeitswerte als Funktion der Ähnlichkeitswerte ermittelt wird.

16. Verfahren nach einem der Ansprüche 12 oder 13,
**dadurch gekennzeichnet,**
**dass** als Schwellenwert zur Einstufung hinsichtlich Ähnlichkeit bzw. Unähnlichkeit ein Bruchteil oder ein Vielfaches des mittleren Ähnlichkeitswertes der Kanalschätzungen herangezogen wird.

17. Verfahren nach einem der vorhergehenden Ansprüche,
**dadurch gekennzeichnet,**
**dass** die Gruppierung von Kanalschätzungen in jeweils eine Gruppe nach der Bedingung vorgenommen wird, dass jede Kanalschätzung zu allen anderen Kanalschätzungen in der gleichen Gruppe als ähnlich eingestuft sein muss.

18. Verfahren nach einem der vorhergehenden Ansprüche,
**dadurch gekennzeichnet,**
**dass** zur Gruppenbildung und Gruppenzuordnung zunächst die das mindestens eine Ähnlichkeitsmaß am besten erfüllenden Kanalschätzungen in eine Gruppe gruppiert und die anderen Kanalschätzungen mit diesen schon eingruppierten Kanalschätzungen hinsichtlich des Erreichens eines Schwellenwertes verglichen werden.

19. Verfahren nach Anspruch 18,
**dadurch gekennzeichnet,**
**dass** für den Fall, dass mehrere Kanalschätzungen einen Schwellenwert erreichen, die Kanalschätzung mit der kleinsten bzw. größten Summe des Ähnlichkeitswertes zu
den bisher in der Gruppe befindlichen Kanalschätzungen in die Gruppe aufgenommen wird.

20. Verfahren nach einem der vorhergehenden Ansprüche,
**dadurch gekennzeichnet,**
**dass** die Eingruppierung gemäß mindestens einem der Ansprüche 17 bis 19 sukzessive fortgesetzt wird, bis alle Kanalschätzungen jeweils einer Gruppe zugeordnet sind.

21. Verfahren nach einem der vorhergehenden Ansprüche,
**dadurch gekennzeichnet,**
**dass** aus mindestens einer Gruppe von Kanalschätzungen eine die Gruppe repräsentierende Kanalschätzung ausgewählt wird.

22. Verfahren nach Anspruch 21,
**dadurch gekennzeichnet,**
**dass** als Auswahlkriterium für die jeweils eine Gruppe repräsentierende Kanalschätzung der arithmetische Durchschnitt aller Kanalschätzungen in dieser Gruppe herangezogen wird.

23. Verfahren nach einem der Ansprüche 21 oder 22,
**dadurch gekennzeichnet,**
**dass** pro Gruppe alle Kanalschätzungen durch die dazugehörige repräsentierende Kanalschätzung ersetzt werden.

24. Verfahren nach einem der vorhergehenden Ansprüche,
**dadurch gekennzeichnet,**
**dass** die die Gruppe repräsentierende Kanalschätzung einen Joint-Detection-Algorithmus bereitgestellt wird,
der zu jedem Spreizungscode bzw. zu jeder eine Gruppe repräsentierenden Kanalschätzung die dazugehörigen Nutzdaten des Signals herausrechnet.

25. Vorrichtung mit einem Prozessor, der derart eingerichtet ist, dass von ihm die Verfahrensschritte gemäß einem der Ansprüche 1 mit 24 durchgeführt werden.

26. Vorrichtung nach Anspruch 25,
**dadurch gekennzeichnet,**
**dass** sie als mobiles Telekommunikationsgerät mit einem Empfangsmodul ausgebildet ist und ein Sendemodul umfasst.

## Claims

1. Method for assessing which signals from a data flow belong to the corresponding channels of a mobile radio system transmitting the respective signals, wherein the signals contain useful data and identification data and wherein said identification data is respectively associated with a channel evaluation of the channel transmitting the respective signal,
**characterised in that**
said channel evaluations are classified into groups of one or more similarly classified channel evaluations, based on at least one similarity indicator, it being possible for at least some of these channel evaluations in each group to be taken into account in order to determine a channel evaluation representing the respective group.

2. Method according to claim 1,
**characterised in that**
the signals are mobile radio signals.

3. Method according to claim 2,
**characterised in that**
the mobile radio signals are mobile radio signals transmitted and received according to UMTS TDD mode.

4. Method according to one of the preceding claims,
**characterised in that**
the identification data comprises spreading codes, with which at least one data sequence is respectively associated.

5. Method according to claim 4,
**characterised in that**
the identification data comprises spreading codes, with which a midamble according to the signals transmitted in UMTS TDD mode is respectively associated.

6. Method according to one of the preceding claims,
**characterised in that**
at least some signals are weighted with antenna coefficients, which belong to transmit antennas, by way of which these signals are transmitted.

7. Method according to one of the preceding claims,
**characterised in that**
the similarity of channel evaluations is determined relative to one another or absolutely with the aid of at least one similarity indicator expressed in similarity values.

8. Method according to claim 7,
**characterised in that**
the similarity of channel evaluations is determined absolutely in relation to one or more values that are independent of the respective channel evaluations with the aid of the at least one similarity indicator expressed in similarity values.

9. Method according to one of claims 7 or 8,
**characterised in that**
a similarity value is determined between two channel evaluations respectively based on the at least one similarity indicator, in order to use this similarity value as the basis for said grouping.

10. Method according to claim 9,
**characterised in that**
the Euclidean distance between two channel evaluations respectively is taken into account as the similarity indicator.

11. Method according to claim 10,
**characterised in that**
a defined distance value between two channel evaluations respectively is used as the threshold value for classification in respect of similarity and/or dissimilarity.

12. Method according to one of the preceding claims,
**characterised in that**
a statistical analysis of the similarity values of two channel evaluations respectively is carried out.

13. Method according to claim 12,
**characterised in that**
a threshold value that is a function of the statistical analysis is used for classification in respect of similarity and/or dissimilarity.

14. Method according to one of claims 12 or 13,
**characterised in that**
an extremum in the diagram of the frequency of occurrence of the individual similarity values as a function of the similarity values is determined as the threshold value for classification in respect of similarity and/or dissimilarity.

15. Method according to claim 14,
**characterised in that**
a minimum in the diagram of the frequency of occurrence of the individual similarity values as a function of the similarity values is determined as the threshold value.

16. Method according to one of claims 12 or 13,
**characterised in that**
a fraction or multiple of the mean similarity value of the channel evaluations is used as the threshold value for classification in respect of similarity and/or dissimilarity.

17. Method according to one of the preceding claims,
**characterised in that**
the grouping of channel evaluations into one group respectively is carried out according to the condition that each channel evaluation must be classified as similar to all the other channel evaluations in the same group.

18. Method according to one of the preceding claims,
**characterised in that**
for group formation and group association purposes the channel evaluations best satisfying the at least one similarity indicator are first grouped into a group and the other channel evaluations are compared with these already grouped channel evaluations in respect of the reaching of a threshold value.

19. Method according to claim 18,
**characterised in that**
in the event that a number of channel evaluations reach a threshold value, the channel evaluation with the smallest or greatest sum of similarity value to the channel evaluations in the group to date is included in the group.

20. Method according to one of the preceding claims,
**characterised in that**
the grouping according to at least one of claims 17 to 19 is continued successively until all the channel evaluations are associated with one group respectively.

21. Method according to one of the preceding claims,
**characterised in that**
a channel evaluation representing the group is selected from at least one group of channel evaluations.

22. Method according to claim 21,
**characterised in that**
the arithmetic average of all the channel evaluations in the group is taken into account as the selection criterion for the channel evaluation representing one group respectively.

23. Method according to one of claims 21 or 22,
**characterised in that**
all the channel evaluations are replaced by the associated representing channel evaluation for each group.

24. Method according to one of the preceding claims,
**characterised in that**
the channel evaluation representing the group is subjected to a joint detection algorithm, which calculates out the associated useful data of the signal for each spreading code and/or each channel evaluation representing a group.

25. Device with a processor, which is set up in such a manner that the method steps according to one of claims 1 to 24 inclusive are performed by it.

26. Device according to claim 25,
**characterised in that**
it is configured as a mobile telecommunications device with a receive module and comprises a transmit module.

## Revendications

1. Procédé permettant d'évaluer l'appartenance de signaux d'un flux de données aux canaux correspondants, transmettant les signaux respectifs d'un système de téléphonie mobile, les signaux contenant des données utiles et des données d'identification, et à chaque fois une évaluation de canal du canal transmettant le signal respectif étant attribuée auxdites données d'identification,
**caractérisé en ce que**
lesdites évaluations de canal sont ordonnées à l'aide d'au moins une mesure de similitude en groupes de une ou plusieurs évaluations de canal classées comme identiques, au moins certaines de ces évaluations de canal pouvant être utilisées dans respectivement un groupe pour déterminer une évaluation de canal représentant le groupe respectif.

2. Procédé selon la revendication 1,
**caractérisé en ce que**
les signaux sont des signaux de téléphonie mobile.

3. Procédé selon la revendication 2,
**caractérisé en ce que**
les signaux de téléphonie mobile sont des signaux de téléphonie mobile transmis et reçus selon le mode UMTS-TDD.

4. Procédé selon l'une quelconque des revendications précédentes,
**caractérisé en ce que**
les données d'identification comportent des codes d'étalement à chacun desquels est attribuée au moins une séquence de données.

5. Procédé selon la revendication 4,
**caractérisé en ce que**
les données d'identification comportent des codes d'étalement à chacun desquels est attribué un midambule en fonction des signaux transmis dans le mode UMTS-TDD.

6. Procédé selon l'une quelconque des revendications précédentes,
**caractérisé en ce que**
au moins certains signaux sont pondérés avec des coefficients d'antenne qui appartiennent à des antennes émettrices, par lesquelles ces signaux sont transmis.

7. Procédé selon l'une quelconque des revendications précédentes,
**caractérisé en ce que**
la similitude d'évaluations de canal les unes par rapport aux autres ou de façon absolue est déterminée à l'aide de l'au moins une mesure de similitude exprimée en valeurs de similitude.

8. Procédé selon la revendication 7,
**caractérisé en ce que**
la similitude d'évaluations de canal est déterminée de façon absolue par rapport à une ou plusieurs valeurs indépendantes des évaluations de canal respectives à l'aide de l'au moins une mesure de similitude exprimée en valeurs de similitude.

9. Procédé selon l'une quelconque des revendications 7 ou 8,
**caractérisé en ce que**
on détermine une valeur de similitude entre respectivement deux évaluations de canal à l'aide de l'au moins une mesure de similitude, afin d'utiliser cette valeur de similitude comme base pour ledit groupement.

10. Procédé selon la revendication 9,
**caractérisé en ce que**
l'espacement euclidien entre respectivement deux évaluations de canal est utilisé comme mesure de similitude.

11. Procédé selon la revendication 10,
**caractérisé en ce que**
une valeur d'espacement définie entre à chaque fois deux évaluations de canal est utilisée comme valeur seuil pour le classement concernant la similitude ou la non-similitude.

12. Procédé selon l'une quelconque des revendications précédentes,
**caractérisé en ce que**
une analyse statistique des valeurs de similitude de respectivement deux évaluations de canal est effectuée.

13. Procédé selon la revendication 12,
**caractérisé en ce que**
une valeur seuil dépendante de l'analyse statistique est utilisée pour le classement concernant la similitude ou la non-similitude.

14. Procédé selon l'une quelconque des revendications 12 ou 13,
**caractérisé en ce que**
un extremum dans la représentation de la fréquence d'apparition des différentes valeurs de similitude en fonction des valeurs de similitude est déterminé comme valeur seuil pour le classement concernant la similitude ou la non-similitude.

15. Procédé selon la revendication 14,
**caractérisé en ce que**
un minimum dans la représentation de la fréquence d'apparition des différentes valeurs de similitude en fonction des valeurs de similitude est déterminé comme valeur seuil.

16. Procédé selon l'une quelconque des revendications 12 ou 13,
**caractérisé en ce que**
une fraction ou un multiple de la valeur de la similitude moyenne des évaluations de canal est utilisé comme valeur seuil pour le classement concernant la similitude ou la non-similitude.

17. Procédé selon l'une quelconque des revendications précédentes,
**caractérisé en ce que**
le groupement d'évaluations de canal est effectué en respectivement un groupe selon la condition que chaque évaluation de canal par rapport à toutes les autres évaluations de canal doit être classée comme similaire dans le même groupe.

18. Procédé selon l'une quelconque des revendications précédentes,
**caractérisé en ce que**,
pour la formation de groupes et l'attribution au groupe, les évaluations de canal répondant au mieux à au moins une mesure de similitude sont d'abord groupées dans un groupe et les autres évaluations de canal sont comparées avec ces évaluations de canal déjà groupées en ce qui concerne le fait d'atteindre une valeur seuil.

19. Procédé selon la revendication 18,
**caractérisé en ce que**,
dans le cas où plusieurs évaluations de canal atteignent une valeur seuil, l'évaluation de canal avec la somme minimale ou maximale de la valeur de similitude par rapport aux évaluations de canal se trouvant jusqu'à présent dans le groupe est intégrée dans le groupe.

20. Procédé selon l'une quelconque des revendications précédentes,
**caractérisé en ce que**
le groupement selon au moins l'une des revendications 17 à 19 est continué de façon successive jusqu'à ce que toutes les évaluations de canal soient attribuées respectivement à un groupe.

21. Procédé selon l'une quelconque des revendications précédentes,
**caractérisé en ce que**
une évaluation de canal représentant le groupe est choisie à partir d'au moins un groupe d'évaluations de canal.

22. Procédé selon la revendication 21,
**caractérisé en ce que**
comme critère de sélection pour l'évaluation de canal représentant respectivement un groupe, la moyenne arithmétique de toutes les évaluations de canal dans ce groupe est utilisée.

23. Procédé selon l'une quelconque des revendications 21 ou 22,
**caractérisé en ce que**
toutes les évaluations de canal sont remplacées par groupe par l'évaluation de canal représentante et spécifique.

24. Procédé selon l'une quelconque des revendications précédentes,
**caractérisé en ce que**
l'évaluation de canal représentant le groupe est mise à la disposition d'un algorithme de détection conjointe qui calcule pour chaque code d'étalement ou pour chaque évaluation de canal représentant un groupe les données utiles spécifiques du signal.

25. Dispositif comprenant un processeur qui est aménagé de telle sorte qu'il effectue les étapes de procédé selon l'une quelconque des revendications 1 à 24.

26. Dispositif selon la revendication 25,
**caractérisé en ce que**
il est conçu sous forme d'appareil de communication mobile avec un module de réception et comporte un module d'émission.
